# EUROPEAN PATENT SPECIFICATION

(11) **EP 3 073 717 B1**
(45) Date of publication and mention of the grant of the patent: **23.10.2019**
(21) Application number: 16155533.9
(22) Date of filing: 27.02.2012
(51) Int. Cl.: H04M 1/725, H04M 1/57, H04M 1/663, G06F 3/0488, H04M 1/22, H04M 19/04

(54) **METHOD AND APPARATUS PERTAINING TO PROCESSING INCOMING CALLS**
VERFAHREN UND VORRICHTUNG IN ZUSAMMENHANG MIT DER VERARBEITUNG VON EINGEHENDEN ANRUFEN
PROCÉDÉ ET APPAREIL RELATIFS AU TRAITEMENT D'APPELS ENTRANTS

(43) Date of publication of application: 28.09.2016
(62) Divisional of application: 12157117.8
(73) Proprietor: BlackBerry Limited, Waterloo, ON N2K 0A7 (CA)
(72) Inventor: GREISSON, Erik Artur, 21155 Malmo (SE); RYDENHAG, Daniel Tobias, 41459 Gothenburg (SE)
(74) Representative: Noble, Nicholas

(56) References cited:
- EP-A1- 2 120 436
- EP-A2- 2 330 808
- WO-A2-2008/051718
- US-A1- 2007 036 347
- US-A1- 2008 057 926
- US-A1- 2010 257 490

## Description

### Field of Technology

The present disclosure relates to communication devices, including but not limited to portable communication devices having touch-sensitive displays.

### Background

Many portable communication devices are capable of receiving an incoming call. This typically includes first notifying the user of the incoming call and then accepting/completing the call if and when the user takes some corresponding acceptance action (such as pressing a corresponding real or virtual button).

Modern devices also sometimes accommodate other responses to an incoming call. Examples including muting a corresponding audio alert and "ignoring" an incoming call to thereby cause, for example, the incoming call to be promptly directed to a voice mail service.

As incoming call response options grow more varied and complex, the device's user interface is not always sufficiently clear and user friendly in these regards for all potential users. As a result, improvements in these regards are desirable.

EP2120436 is directed to an incoming call answering and rejecting method, an electronic device, and a digital data storage media are provided. The method is applied to an electronic device having a touch screen and has the following steps. A request of an incoming call is received. A dragging signal is generated on the touch screen. When the dragging signal is an answering signal, the incoming call is answered. When the dragging signal is a rejecting signal, the incoming call is rejected.

US 2010/0257490 is directed to a system and method for preventing unintentional activation and/or input in an electronic device are provided. A movable on-screen user interface object is provided as an unlocking mechanism in a device having a touch-sensitive surface. The user moves the object in any desired direction from a starting point (or origin); if the object is moved a sufficient distance away from the starting point, the device is unlocked. The required amount of movement may be defined by a threshold which may or may not be made visible to the user.

### Summary

The invention is set out in the claims.

### Brief Description of the Drawings

- FIG. 1: is a block diagram in accordance with the disclosure.
- FIG. 2: is a perspective view in accordance with the disclosure.
- FIG. 3: is a top plan view in accordance with the disclosure.
- FIG. 4: is a top plan view in accordance with the disclosure.
- FIG. 5: is a top plan view in accordance with the disclosure.

### Detailed Description

The following describes an apparatus and method pertaining to a portable communication device having a wireless transceiver, a touch-screen display, and a corresponding control circuit. The control circuit provides an incoming-call response-initiation zone on the touch-screen display in response to an incoming call. The control circuit then takes an incoming-call processing action in response to detecting a user's swipe-based gesture that begins in that incoming-call response-initiation zone.

By one approach the incoming-call response-initiation zone comprises a horizontal stripe that extends laterally at least substantially across the touch-screen display. By one approach this stripe is disposed approximately midway between opposing ends of the touch-screen display.

So configured, and by one approach, a user can begin a swipe in the incoming-call response-initiation zone that extends in a first direction that corresponds to accepting the call. By one approach, if the user begins the swipe in the incoming-call response-initiation zone but extends that swipe in a second direction (that is, for example, opposite to the first direction) a different incoming call processing action results (such as "ignoring" the incoming call).

These teachings are highly flexible in practice and will accommodate a great variety of implementation variations. These teachings will also accommodate any number of incoming-call responses and hence can serve to significantly leverage the continued value of existing practices in those regards.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

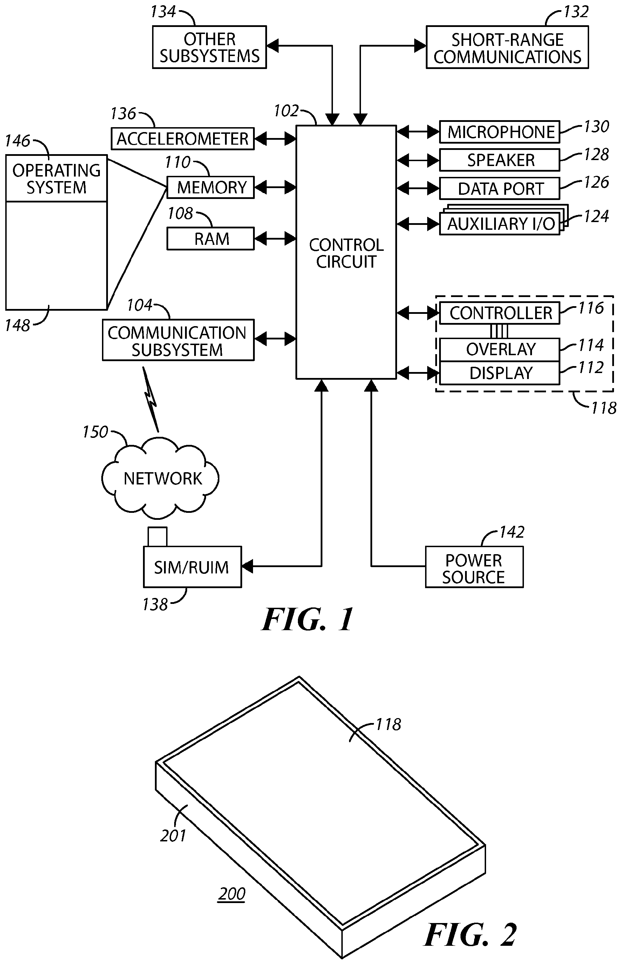

Referring to FIG. 1, an exemplary portable electronic device (such as, but not limited to, a cellular phone) includes a control circuit 102 (such as a properly programmed processor) that controls the overall operation of the portable electronic device. Communication functions, including data and voice communications, are performed through a communication subsystem 104. The communication subsystem receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device.

The control circuit 102 interacts with other elements, such as a Random Access Memory (RAM) 108, a memory 110, a display 112 with a touch-sensitive overlay 114 operably coupled to an electronic controller 116 that together comprise an optional touch-sensitive display 118 (sometimes referred to herein as a touch-screen display), an auxiliary input/output (I/O) subsystem 124 (which might comprise, for example, a physical keyboard such as a full QWERTY keyboard), a data port 126, a speaker 128, a microphone 130, a short-range communication subsystem 132 (such as, for example, a Bluetooth-based short-range communication subsystem), and other device subsystems 134 of choice.

One or more user interfaces are provided. Input via a graphical user interface is provided via the touch-sensitive overlay 114. The control circuit 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the control circuit 102.

The control circuit 102 may interact with an accelerometer 136 that may be utilized to detect direction of gravitational forces or gravity-induced reaction forces.

To identify a subscriber for network access, the portable electronic device may utilize a Subscriber Identity Module or a Removable User Identity Module (SIM/RUIM) card 138 for communication with a network, such as the wireless network 150. Alternatively, user identification information may be programmed into the memory 110.

The portable electronic device includes an operating system 146 and software programs, applications, or components 148 that are executed by the control circuit 102 and are typically stored in a persistent, updatable store such as the memory 110. Additional applications or programs may be loaded onto the portable electronic device through the wireless network 150, the auxiliary I/O subsystem 124, the data port 126, the short-range communications subsystem 132, or any other suitable subsystem 134. The memory 110 may comprise a non-transitory storage media that stores executable code that, when executed, causes the control circuit 102 to carry out one or more of the functions or actions described herein.

A received signal such as a text message, an e-mail message, or web page download is processed by the communication subsystem and input to the control circuit 102. The control circuit 102 processes the received signal for output to the display 112 and/or to the auxiliary I/O subsystem 124. A subscriber may generate data items, for example e-mail messages, that may be transmitted over the wireless network 150 through the communication subsystem. For voice communications, the overall operation of the portable electronic device is similar. The speaker 128 outputs audible information converted from electrical signals and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. One or more touches, also known as touch contacts, touch events, or sometimes gestures may be detected by the touch-sensitive display 118. The control circuit 102 may determine attributes of the touch, including a location, direction, and/or extent of a touch. Touch location data may include data for an area of contact or data for a single point of contact, such as a point at or near a center of the area of contact.

Referring to FIG. 2, for the sake of illustration but without intending any limitations in these regards, the following description will presume that the portable electronic device comprises a portable two-way wireless communications device 200 such as a so-called smartphone. Such a device 200 often comprises a housing 201 to contain the foregoing components including the touch-screen display 118.

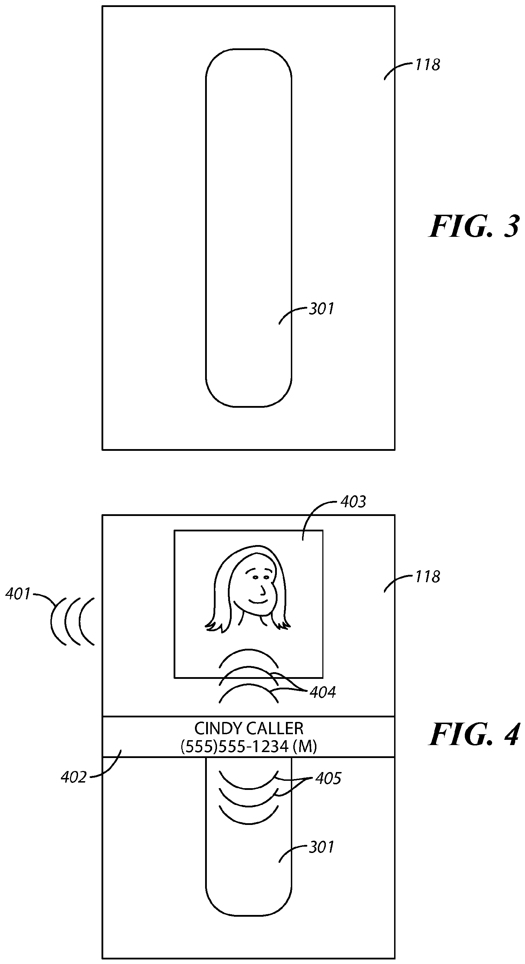

Generally speaking and referring now to FIG. 3, the aforementioned control circuit 102 can be configured (using, for example, corresponding programming as will be well understood by those skilled in the art) to provide application-specific content 301 on the touch-screen display 118. This can comprise essentially any content and essentially any application as the present teachings are relatively insensitive to any particular choices in these regards.

When, however, incoming-call signaling arrives (via, for example, the aforementioned communication subsystem 104), the control circuit 102 responds by providing an incoming-call alert (such as an audible alert 401 as shown in FIG. 4) and by providing on the touch-screen display 118 an incoming-call response-initiation zone 402. The form factor, content, and relative location of this incoming-call response-initiation zone 402 can vary as desired. As illustrated here, this incoming-call response-initiation zone 402 comprises a horizontal stripe that extends at least substantially across the touch-screen display 188. Also as illustrated herein, the incoming-call response-initiation zone 402 is disposed approximately midway between opposing ends of the touch-screen display 118.

These illustrated specifics regarding the incoming-call response-initiation zone 402 are intended to serve only an illustrative purpose and are not to taken as implying any specific limitations in these regards. In fact, any number of other form factors (such as circles, squares, triangles, or other less-regular shapes) and/or locations (such as a vertical orientation, or disposition near the top or bottom edge of the touch-screen display 118) can be used as desired.

In this illustrative example the incoming-call response-initiation zone 402 includes some textual information regarding the calling party. In particular, this includes the name of the caller ("Cindy Caller" in this example) and the caller's telephone number along with an indication ("M" in this example) that this telephone number comprises a mobile number for the caller. Such information may be gleaned, at least in part, using caller ID signaling as known in the art. This information may also rely, however, at least in part, upon information stored in a contacts list that is locally available to the control circuit 102.

Also in this illustrative example the incoming-call response-initiation zone 402 serves to divide the presentation space of the touch-screen display 118 into a lower space that continues to present the pre-call application-specific content 301 and an upper space that presents further information 403 that corresponds to the calling party. Here, that further information 403 comprises a photographic thumbnail image of the calling party that the control circuit 102 retrieves from the aforementioned contacts list. If desired, of course, the relative positioning of such content on either side of the incoming-call response-initiation zone 402 can be reversed such that the pre-call application-specific content 301 appears in the upper half of the touch-screen display 118 and the incoming-call information 403 appears in the bottom half of the touch-screen display 118.

The control circuit 102 then monitors for a user's swipe-based gesture that begins in the incoming-call response-initiation zone 402. Both the starting point of this gesture as well as the direction of the gesture have substantive meaning in this context. To convey a sense of this convention, by one approach the control circuit 102 can present one or more images on the touch-screen display 118 to suggest to the user that the user make such a swipe-based gesture.

By one approach, and as illustrated, this presentation can comprise providing shimmering waves/ripples 404 and 405 that appear to move away from the incoming-call response-initiation zone 402. In particular, one set of waves 404 moves upwardly while the other set of waves 405 moves downwardly.

By one approach these waves 404 and 405 can comprise separate and distinct graphic elements (such as arcs that are colored a specific predetermined color). By another approach these waves 404 and 405 can be formed by distorting corresponding portions of the underlying image. This distortion might comprise, for example, modifying any of a variety of presentation parameters such as, but not limited to, hue, saturation, color, resolution, focus, and so forth.

So configured, the first set of waves 403 visually suggest that swiping upwardly from the incoming-call response-initiation zone 402 selects one choice while swiping downwardly from the incoming-call response-initiation zone 402 selects a different choice.

These teachings will accommodate a variety of approaches in these regards instead of the suggested waves. For example, static or animated dots, arrows, or other pointers could serve in a similar regard as desired.

Upon swiping downwardly from the incoming-call response-initiation zone 402, the incoming-call processing action taken by the control circuit 102 is to accept the incoming call. The details regarding call acceptance are well known in the art and require no further elaboration here.

Upon swiping upwardly from the incoming-call response-initiation zone 402, the incoming-call processing action taken by the control circuit 102 in this illustrative example is to refuse the call. By one approach this can comprise "ignoring" the call as is known in the art (in which case the incoming call is typically diverted quickly and prematurely to a voice mail service for the called party) and returning the touch-screen display 118 to the pre-call application content 301 as shown in FIG. 3.

In some cases, the user may only tap (or touch) the incoming-call response-initiation zone 402. The control circuit 102 can respond by muting any further audible incoming-call alerts for this particular incoming call, but further incoming-call processing action can be delayed until the user makes a more specific indication of a desired result. This can comprise, for example, waiting for one of the aforementioned swipe-based gestures.

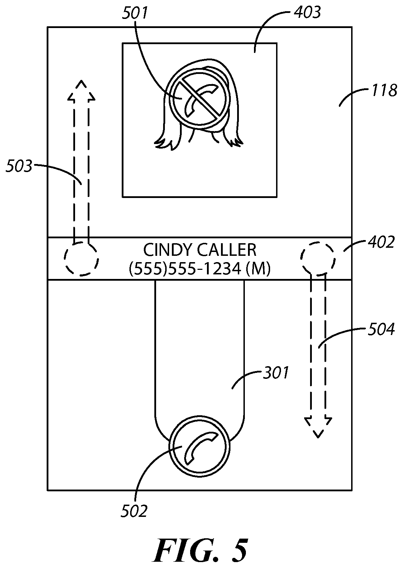

By one approach, and as suggested by the illustration shown in FIG. 5, this can comprise using icons or other imagery to prompt the user to make an appropriate swipe-based gesture. For example, one such icon 501 can comprise an icon that represents refusing the call while another such icon 502 can comprise an icon that represents accepting the call. If desired, when providing such icons 501 and 502 the control circuit 102 can visually subdue the underlying imagery (for example, by reducing the brightness or color content of the image) to emphasize the presence of the icons 501 and 502.

As before, if desired, supplemental imagery (such as the aforementioned waves) can serve to suggest making a swipe-based gesture towards one of these displayed icons 501 and 502. Such imagery might be provided immediately upon presenting such icons 501 and 502 or may only be presented if the user should first tap the incoming-call response-initiation zone 402 and then tap one of the icons 501 and 502 without making an intervening swipe-based gesture to thereby help the user understand the specific touch-based gesture that will select the desired incoming-call processing action.

By one approach, when displaying such icons 501 and 502 the swipe-based gesture must begin at the incoming-call response-initiation zone 402 and extend to or through one of the icons in order to select and effect the desired action. By another approach the swipe need not include one of the icons 501 and 502 in order to be recognized as selecting a particular incoming-call processing action. For example, as illustrated, a first swipe 503 that begins in the incoming-call response-initiation zone 402 and that extends a sufficient distance upwardly can be recognized by the control circuit 102 as selecting the incoming-call processing action of ignoring the call. Alternatively, a swipe 504 that begins in the incoming-call response-initiation zone 402 and that extends a sufficient distance downwardly can be recognized by the control circuit 102 as selecting the incoming-call processing action of accepting the call.

So configured, the control circuit 102 can readily and quickly convey (visually) to a user both a sense of the available incoming-call processing action opportunities as well as how to select from amongst these opportunities. By one approach the amount of information utilized to convey the foregoing can be increased over time in response to user actions that are insufficient in and of themselves to effect a particular choice in these regards.

These teachings are readily and economically deployed and are easily scaled to suit a wide variety of differently enabled and differently sized displays and devices.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning of the claims are to be embraced within their scope.

## Claims

1. An apparatus comprising:
a wireless transceiver (104);
a touch-screen display (118);
a control circuit (102) operably coupled to the touch-screen display and the wireless transceiver and configured to :
display pre-call application-specific content on the touch-screen display (118);
in response to an incoming call: provide on the touch-screen display (118): an icon overlying a portion of the pre-call application-specific content, and an incoming-call response-initiation zone (402) indicating that the incoming-call response initiation zone relates to a telephone call to the apparatus, the incoming-call response-initiation zone (402) dividing the touch-screen display (118) into a space that continues to present the pre-call application-specific content and a space that presents further information that corresponds to a calling party, and visually subdue the pre-call application-specific content on the touch-screen display;
take an incoming-call processing action in response to detecting a user's swipe-based gesture (503, 504) that begins within the incoming-call response-initiation zone; and
wherein the control circuit is configured to take an incoming-call processing action in response to detecting a user's swipe-based gesture that begins in the incoming-call response-initiation zone by accepting the call when the user's swipe-based gesture comprises a swipe in a first direction towards the icon.

2. The apparatus of claim 1 wherein the incoming-call response-initiation zone comprises a stripe that extends at least substantially across the touch-screen display.

3. The apparatus of claim 1 wherein the icon represents accepting the call.

4. The apparatus of claim 3 wherein the control circuit is further configured to:
present at least one image via the touch-screen display to suggest making a swipe-based gesture towards the first icon upon detecting that the user taps the incoming-call response-initiation zone and then taps the first icon.

5. The apparatus of claim 1 wherein the control circuit is further configured to take an incoming-call processing action in response to detecting a user's swipe-based gesture that begins in the incoming-call response-initiation zone by refusing the call when the user's swipe-based gesture comprises a swipe in a second direction that is different than the first direction.

6. The apparatus of claim 5 wherein the second direction is substantially opposite the first direction.

7. The apparatus of claim 6 wherein the second direction is towards a depiction of a second icon on the touch-screen display, which second icon represents refusing the call.

8. The apparatus of claim 1 wherein the control circuit is further configured to:
mute any audible signaling as corresponds to signaling the incoming call in response to detecting a user's contacting the incoming-call response-initiation zone.

9. The apparatus of claim 8 wherein the control circuit is configured to mute any audible signaling as corresponds to signaling the incoming call in response to detecting a user's contacting the incoming-call response-initiation zone regardless of whether the user contact comprises a part of a swipe-based gesture.

10. The apparatus of claim 1 wherein the apparatus comprises a portable communications device.

11. A method performed by an apparatus, the apparatus comprising a mobile device, the method comprising:
displaying pre-call application-specific content on a touch-screen display (118) of the mobile device;
in response to an incoming call: providing on a touch-screen display (118) of the mobile device:
an icon overlying a portion of the pre-call application-specific content, and an incoming-call response-initiation zone (402) indicating that the incoming-call response-initiation zone relates to a telephone call to the apparatus, the incoming-call response-initiation zone (402) dividing the touch-screen display (118) into a space that continues to present the pre-call application-specific content and a space that presents further information that corresponds to a calling party, and visually subduing the pre-call application-specific content on the touch-screen display;
taking an incoming-call processing action in response to detecting a user's swipe-based gesture (503, 504) that begins within the incoming-call response-initiation zone by accepting the call when the user's swipe-based gesture comprises a swipe in a first direction towards the icon.

12. A non-transitory storage media that stores executable code that, when executed by the apparatus of any one of claim 1 to 10, causes the apparatus to perform the method of claim 11.

## Patentansprüche

1. Vorrichtung umfassend:
eine drahtlose Sende-Empfangseinheit (104);
eine Touchscreen-Anzeige (118);
eine Steuerschaltung (102), die funktionsfähig mit der Touchscreen-Anzeige und der drahtlosen Sende-Empfangseinheit gekoppelt und konfiguriert ist, um:
einen anwendungsspezifischen Pre-Call-Inhalt auf der Touchscreen-Anzeige (118) anzuzeigen;
als Reaktion auf einen eingehenden Anruf: auf der Touchscreen-Anzeige (118) folgendes bereitzustellen: ein Symbol, das über einem Abschnitt des anwendungsspezifischen Pre-Call-Inhalts liegt, und eine Antworteinleitungszone (402) für einen eingehenden Anruf, die anzeigt, dass sich die Antworteinleitungszone für einen eingehenden Anruf auf einen Telefonanruf an die Vorrichtung bezieht, wobei die Antworteinleitungszone (402) für einen eingehenden Anruf die Touchscreen-Anzeige (118) in einen Bereich, der weiterhin den anwendungsspezifischen Pre-Call-Inhalt präsentiert, und einen Bereich unterteilt, der weitere Informationen präsentiert, die einem Anrufer entsprechen,
und den anwendungsspezifischen Pre-Call-Inhalt auf der Touchscreen-Anzeige optisch unterdrückt;
einen Verarbeitungsvorgang für einen eingehenden Anruf als Reaktion auf das Erfassen einer auf einem Wischen (swipe) basierten Geste (503, 504) eines Benutzers auszuführen, die innerhalb der Antworteinleitungszone für eingehende Anrufe beginnt; und
wobei die Steuerschaltung konfiguriert ist, um einen Verarbeitungsvorgang für einen eingehenden Anruf als Reaktion auf das Erfassen einer auf einem Wischen basierten Geste eines Benutzers durchzuführen, die in der Antworteinleitungszone für einen eingehenden Anruf beginnt, indem der Anruf angenommen wird, wenn die auf einem Wischen basierte Geste des Benutzers ein Wischen in eine erste Richtung zum Symbol hin umfasst.

2. Vorrichtung nach Anspruch 1, wobei die Antworteinleitungszone für den eingehenden Anruf einen Streifen umfasst, der sich zumindest weitgehend über die Touchscreen-Anzeige erstreckt.

3. Vorrichtung nach Anspruch 1, wobei das Symbol die Annahme des Anrufs darstellt.

4. Vorrichtung nach Anspruch 3, wobei die Steuerschaltung weiter konfiguriert ist, um: mindestens ein Bild über die Touchscreen-Anzeige zu präsentieren, um vorzuschlagen, eine auf einem Wischen basierte Geste in Richtung auf das erste Symbol auszuführen, wenn festgestellt wird, dass der Benutzer die Antworteinleitungszone für den eingehenden Anruf antippt und dann das erste Symbol antippt.

5. Vorrichtung nach Anspruch 1, wobei die Steuerschaltung weiter konfiguriert ist, um einen Verarbeitungsvorgang auf einen eingehenden Anruf als Reaktion auf das Erfassen der auf einem Wischen basierten Geste eines Benutzers durchzuführen, die in der Antworteinleitungszone für einen eingehenden Anruf beginnt, indem der Anruf abgelehnt wird, wenn die auf einem Wischen basierte Geste des Benutzers ein Wischen in eine zweite Richtung umfasst, die sich von der ersten Richtung unterscheidet.

6. Vorrichtung nach Anspruch 5, wobei die zweite Richtung im Wesentlichen entgegengesetzt zur ersten Richtung ist.

7. Vorrichtung nach Anspruch 6, wobei die zweite Richtung auf eine Darstellung eines zweiten Symbols auf der Touchscreen-Anzeige gerichtet ist, wobei das zweite Symbol die Ablehnung des Anrufs darstellt.

8. Vorrichtung nach Anspruch 1, wobei die Steuerschaltung weiter konfiguriert ist, um: jede akustische Signalisierung, die der Signalisierung des eingehenden Anrufs entspricht, als Reaktion darauf stumm zu schalten, dass erfasst wird, dass ein Benutzer die Antworteinleitungszone für einen eingehenden Anruf berührt.

9. Vorrichtung nach Anspruch 8, wobei die Steuerschaltung konfiguriert ist, jede akustische Signalisierung, die der Signalisierung des eingehenden Anrufs entspricht, als Reaktion darauf stumm zu schalten, dass erfasst wird, dass ein Benutzer die Antworteinleitungszone für eingehende Anrufe berührt, und zwar unabhängig davon, ob der Benutzerkontakt einen Teil einer auf einem Wischen basierten Geste umfasst.

10. Vorrichtung nach Anspruch 1, wobei die Vorrichtung eine tragbare Kommunikationseinrichtung umfasst.

11. Verfahren, das von einer Vorrichtung durchgeführt wird, wobei die Vorrichtung eine mobile Einrichtung umfasst, wobei das Verfahren umfasst:
Anzeigen eines anwendungsspezifischen Pre-Call-Inhalts auf einer Touchscreen-Anzeige (118) der mobilen Einrichtung;
als Reaktion auf einen eingehenden Anruf: Bereitstellen auf einer Touchscreen-Anzeige (118) der mobilen Einrichtung: ein Symbol, das über einem Abschnitt des anwendungsspezifischen Pre-Call-Inhalts liegt, und eine Antworteinleitungszone (402) für einen eingehenden Anruf, die anzeigt, dass sich die Antworteinleitungszone für einen eingehenden Anruf auf einen Telefonanruf an die Vorrichtung bezieht, wobei die Antworteinleitungszone (402) für einen eingehenden Anruf die Touchscreen-Anzeige (118) in einen Bereich, der weiterhin den anwendungsspezifischen Pre-Call-Inhalt präsentiert, und einen Bereich unterteilt, der weitere Informationen präsentiert, die einem Anrufer entsprechen, und den anwendungsspezifischen Pre-Call-Inhalt auf der Touchscreen-Anzeige optisch unterdrückt,
Ausführen eines Verarbeitungsvorgangs für einen eingehenden Anruf als Reaktion auf das Erfassen einer auf einem Wischen basierten Geste (503, 504) eines Benutzers, die innerhalb der Antworteinleitungszone für eingehende Anrufe beginnt, durch Annehmen des Anrufs, wenn die auf einem Wischen basierte Geste des Benutzers ein Wischen in eine erste Richtung zum Symbol hin umfasst.

12. Beständiges Speichermedium, das ausführbaren Code speichert, der, wenn er durch die Vorrichtung nach einem der Ansprüche 1 bis 10 ausgeführt wird, bewirkt, dass die Vorrichtung das Verfahren nach Anspruch 11 ausführt.

## Revendications

1. Appareil comprenant :
un émetteur-récepteur sans fil (104) ;
un dispositif d'affichage à écran tactile (118) ;
un circuit de commande (102) couplé de manière fonctionnelle au dispositif d'affichage à écran tactile et à l'émetteur-récepteur sans fil et configuré pour :
afficher un contenu spécifique à une application de pré-appel sur le dispositif d'affichage à écran tactile (118) ;
en réponse à un appel entrant : fournir sur le dispositif d'affichage à écran tactile (118) : une icône recouvrant une partie du contenu spécifique à une application de pré-appel, et une zone de déclenchement de réponse à un appel entrant (402) indiquant que la zone de déclenchement de réponse à un appel entrant se rapporte à un appel téléphonique à l'appareil, la zone de déclenchement de réponse à un appel entrant (402) divisant le dispositif d'affichage à écran tactile (118) en un espace qui continue à présenter le contenu spécifique à une application de pré-appel et un espace qui présente des informations supplémentaires qui correspondent à un appelant, et
soumettre visuellement le contenu spécifique à une application de pré-appel sur le dispositif d'affichage à écran tactile ;
entreprendre une action de traitement d'appel entrant en réponse à la détection d'un geste à base de glissement de l'utilisateur (503, 504) qui commence dans la zone de déclenchement de réponse à un appel entrant ; et
dans lequel le circuit de commande est configuré pour entreprendre une action de traitement d'appel entrant en réponse à la détection d'un geste à base de glissement de l'utilisateur qui commence dans la zone de déclenchement de réponse à un appel entrant en acceptant l'appel lorsque le geste à base de glissement de l'utilisateur comprend un glissement dans une première direction vers l'icône.

2. Appareil de la revendication 1, dans lequel la zone de déclenchement de réponse à un appel entrant comprend une bande qui s'étend au moins essentiellement sur le dispositif d'affichage à écran tactile.

3. Appareil de la revendication 1, dans lequel l'icône représente l'acceptation de l'appel.

4. Appareil de la revendication 3, dans lequel le circuit de commande est en outre configuré pour :
présenter au moins une image via le dispositif d'affichage à écran tactile pour suggérer de faire un geste à base de glissement vers la première icône lors de la détection du fait que l'utilisateur appuie sur la zone de déclenchement de réponse à un appel entrant et ensuite appuie sur la première icône.

5. Appareil de la revendication 1, dans lequel le circuit de commande est en outre configuré pour entreprendre une action de traitement d'appel entrant en réponse à la détection d'un geste à base de glissement de l'utilisateur qui commence dans la zone de déclenchement de réponse à un appel entrant en refusant l'appel lorsque le geste à base de glissement de l'utilisateur comprend un glissement dans une deuxième direction qui est différente de la première direction.

6. Appareil de la revendication 5, dans lequel la deuxième direction est essentiellement opposée à la première direction.

7. Appareil de la revendication 6, dans lequel la deuxième direction est vers une représentation d'une deuxième icône sur le dispositif d'affichage à écran tactile, laquelle deuxième icône représente le refus de l'appel.

8. Appareil de la revendication 1, dans lequel le circuit de commande est en outre configuré pour :
mettre en sommeil tout avertissement audible qui correspond à un avertissement de l'appel entrant en réponse à la détection d'un contact de l'utilisateur avec la zone de déclenchement de réponse à un appel entrant.

9. Appareil de la revendication 8, dans lequel le circuit de commande est configuré pour mettre en sommeil tout avertissement audible qui correspond à un avertissement de l'appel entrant en réponse à la détection d'un contact de l'utilisateur avec la zone de déclenchement de réponse à un appel entrant indépendamment du fait que le contact de l'utilisateur comprenne ou non une partie d'un geste à base de glissement.

10. Appareil de la revendication 1, où l'appareil comprend un dispositif de communications portable.

11. Procédé effectué par un appareil, l'appareil comprenant un dispositif mobile, le procédé comprenant les étapes consistant à :
afficher un contenu spécifique à une application de pré-appel sur un dispositif d'affichage à écran tactile (118) du dispositif mobile ;
en réponse à un appel entrant : fournir sur un dispositif d'affichage à écran tactile (118) du dispositif mobile : une icône recouvrant une partie du contenu spécifique à une application de pré-appel, et une zone de déclenchement de réponse à un appel entrant (402), indiquant que la zone de déclenchement de réponse à un appel entrant se rapporte à un appel téléphonique à l'appareil, la zone de déclenchement de réponse à un appel entrant (402) divisant le dispositif d'affichage à écran tactile (118) en un espace qui continue à présenter le contenu spécifique à une application de pré-appel et un espace qui présente des informations supplémentaires qui correspondent à un appelant, et
soumettre visuellement le contenu spécifique à une application de pré-appel sur le dispositif d'affichage à écran tactile ;
entreprendre une action de traitement d'appel entrant en réponse à la détection d'un geste à base de glissement de l'utilisateur (503, 504) qui commence dans la zone de déclenchement de réponse à un appel entrant en acceptant l'appel lorsque le geste à base de glissement de l'utilisateur comprend un glissement dans une première direction vers l'icône.

12. Support de stockage non transitoire qui stocke un code exécutable qui, lorsqu'il est exécuté par l'appareil de l'une quelconque des revendications 1 à 10, amène l'appareil à effectuer le procédé de la revendication 11.
